# EUROPÄISCHE PATENTSCHRIFT

(11) **EP 3 256 775 B1**
(45) Veröffentlichungstag und Bekanntmachung des Hinweises auf die Patenterteilung: **26.01.2022**
(21) Anmeldenummer: 16704822.2
(22) Anmeldetag: 10.02.2016
(51) Int. Cl.: F21V 5/00, G02B 3/00, G02B 5/02, G02B 19/00

(54) **VERFAHREN ZUM HERSTELLEN EINES SPRITZGIESSWERKZEUGS UND VERFAHREN ZUM ERSTELLEN EINES OPTISCHEN ELEMENTS**
METHOD OF MANUFACTURING AN INJECTION MOLDING TOOL AND METHOD OF MANUFACTURING AN OPTICAL ELEMENT
PROCÉDÉ DE FABRICATION D'UN OUTIL DE MOULAGE PAR INJECTION ET PROCÉDÉ DE FABRICATION D'UN ÉLÉMENT OPTIQUE

(30) Priorität: 12.02.2015 DE 102015202515
(43) Veröffentlichungstag der Anmeldung: 20.12.2017
(73) Patentinhaber: Zumtobel Lighting GmbH, 6850 Dornbirn (AT)
(72) Erfinder: EBNER, Stephan, 6850 Dornbirn (AT); SCHWÄRZLER, Erich, 6941 Langenegg (AT)
(74) Vertreter: Thun, Clemens
(86) Internationale Anmeldenummer: PCT/EP2016/052800
(87) Internationale Veröffentlichungsnummer: WO 2016/128448

(56) Entgegenhaltungen:
- CN-U- 203 810 278
- JP-A- 2009 241 369
- KR-A- 20080 081 561
- KR-A- 20140 062 921
- US-A1- 2003 202 241
- US-A1- 2007 085 942
- US-A1- 2007 092 636
- US-A1- 2012 187 836
- US-A1- 2013 033 863
- US-A1- 2013 135 856
- US-B1- 8 591 074
- Changhwan Kim ET AL: "Fabrication of a fused silica based mold for the microlenticular lens array using a femtosecond laser and a CO_2 laser", Optical Materials Express, vol. 4, no. 11, 1 November 2014 (2014-11-01), page 2233, XP055748012, ISSN: 2159-3930, DOI: 10.1364/OME.4.002233

## Beschreibung

Die vorliegende Erfindung betrifft ein Verfahren zum Herstellen eines Spritzgießwerkzeugs, mit dessen Hilfe ein optisches Element erstellt werden soll.

Leuchtmittel im Allgemeinen, insbesondere jedoch LEDs benötigen zum Anpassen der Lichtabgabe an eine gewünschte Lichtabstrahlcharakteristik optische Systeme, mit deren Hilfe das von den Leuchtmitteln abgegebene Licht in eine gewünschte Richtung gelenkt wird. Derartige optische Systeme sind, wie bereits erwähnt, insbesondere bei der Nutzung von LEDs als Lichtquellen erforderlich, da LEDs Licht in einen sehr breiten Winkelbereich abstrahlen, üblicherweise jedoch lediglich eine Lichtabgabe innerhalb eines definierten Bereichs gewünscht ist. Dabei haben sich insbesondere Linsensysteme als vorteilhaft herausgestellt, welche das Licht über physikalische Brechungseigenschaften in die gewünschte Richtung lenken.

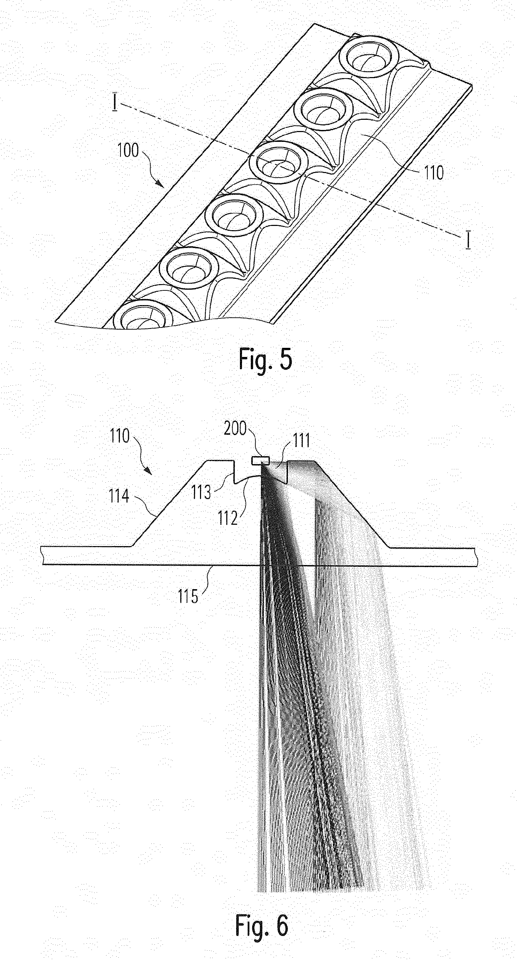

Ein aus dem Stand der Technik bekanntes optisches Element, welches dazu vorgesehen ist, das Licht einer Mehrzahl von in Längsrichtung hintereinander angeordneten LEDs zu beeinflussen, ist in den Figuren 5 und 6 dargestellt, wobei Figur 6 etwa einer Schnittdarstellung entlang der Linie I-I von Figur 5 entspricht.

Das in Figur 5 gezeigte, allgemein mit dem Bezugszeichen 100 versehene optische Element besteht dabei aus einer Mehrzahl von hintereinander angeordneten Linsenkörpern 110, denen jeweils eine LED oder ein LED-Cluster, bestehend bspw. aus drei LEDs in den Farben rot, grün und blau zugeordnet ist. Jeder Linsenkörper 110 ist dabei gleichartig ausgebildet und weist entsprechend der Schnittdarstellung von Figur 6 in etwa eine Kegelstumpfform auf, wobei der LED 200 eine Ausnehmung 111 zugewandt ist, deren Bodenfläche 112 und Umfangsfläche 113 den Lichteintrittsbereich für das Licht der LED 200 bilden. An der gegenüberliegenden Seite dieser Ausnehmung 111 befindet sich die Lichtabstrahlfläche 115, welche über die umlaufende Mantelfläche 114 mit dem Lichteintrittsbereich verbunden ist. Auch komplexere Linsensysteme mit z.B. einem Strahlteiler oder mehrstufig ausgebildete optische Systeme sind denkbar.

Die Wirkungsweise dieser an sich bereits bekannten Optik kann anhand des Strahlenverlaufs, der in Figur 6 schematisch angedeutet ist, nachvollzogen werden.

Dabei ist erkennbar, dass ein Teil des von der LED 200 abgegebenen Lichts über die gewölbte Bodenfläche 112 der Ausnehmung 111 in den Linsenkörper 110 eintritt. Dieses Licht wird beim Übergang in den Linsenkörper 110 mehr oder weniger stark gebrochen, trifft dann im nächsten Schritt auf die Lichtaustrittsfläche 115 und wird über diese zur Unterseite hin abgegeben. Licht hingegen, welches eher seitlich von der LED 200 abgegeben wird, tritt über die Umfangsfläche 113 der Ausnehmung 111 in den Linsenkörper 110 ein, derart, dass es von der Innenseite her auf die Mantelfläche 114 des Linsenkörpers trifft. Die Form des Linsenkörpers 110 ist derart ausgeführt, dass diese Lichtstrahlen an der Mantelfläche 114 total-reflektiert werden. Sie werden hierbei wiederum zur Unterseite hin derart abgelenkt, dass sie den Linsenkörper 110 über dessen Bodenfläche 115 verlassen können.

Derartige Optiken bzw. Linsen sind wie bereits erwähnt aus dem Stand der Technik bekannt und haben sich vielfach bewährt, da das Licht, welches von der LED 200 in unterschiedlichste Richtungen abgegeben wird, trotz allem nahezu vollständig genutzt und effizient über die Lichtaustrittsfläche, die durch die Bodenfläche 115 gebildet wird, abgegeben werden kann. Dementsprechend weisen derartige Optiken also eine hohe Effizienz auf.

Üblicherweise werden derartige Linsensysteme aus einem glasklaren Material, insbesondere aus Kunststoff gebildet. Dabei hat sich als problematisch herausgestellt, dass mit Hilfe derartiger Linsen das LED-Licht zwar effizient gebündelt und zur Unterseite hin abgegeben werden kann, allerdings das über die Bodenfläche 112 in den Linsenkörper 110 eintretende Licht einerseits und das an der Mantelfläche 114 total-reflektierte Licht andererseits nicht vollständig überlagert werden. Wie Figur 6 erkennen lässt, wird dabei auf einer zu beleuchtenden Fläche der zentrale Bereich eher durch das Licht beleuchtet, welches von der LED 200 nach unten abgegeben wird und damit über die Bodenfläche 112 der Ausnehmung 111 in den Linsenkörper 110 eintritt, während hingegen Randbereiche des Beleuchtungsfelds durch das total-reflektierte, also von der LED 200 eher seitlich abgegebene Licht beleuchtet werden. Da LEDs hinsichtlich der Wellenlänge des abgegebenen Lichts eine gewisse Winkelabhängigkeit aufweisen, also bspw. Licht einer längeren Wellenlänge eher seitlich abgegeben wird, hat dies zur Folge, dass im Beleuchtungsfeld Inhomogenitäten, insbesondere helle Stellen bzw. Helligkeitsübergänge und/oder farbliche Unregelmäßigkeiten entstehen können. Diese werden als unschön bzw. störend wahrgenommen und sollten vermieden werden.

Um das Erscheinungsbild hinsichtlich einer gleichmäßigen Ausleuchtung zu verbessern, ist dementsprechend bei den in den Figuren 5 und 6 dargestellten Linsensystemen bereits bekannt, die unschönen und störenden Abbildungen durch diffus-streuende Bereiche zu kaschieren. Hierbei wird die Lichtaustrittsfläche 115 der Optik wird mit einer leicht streuenden Struktur versehen, um die oben beschriebenen Unregelmäßigkeiten auszugleichen.

Das Einbringen dieser Streustrukturen erfolgt dabei durch ein entsprechendes Aufrauen der Oberfläche, wobei genau genommen nicht das optische Element selbst bearbeitet wird, sondern stattdessen das üblicherweise zum Herstellen des optischen Elements vorgesehene Spritzgießwerkzeug. In diesem Fall wird diejenige Fläche des Werkzeugs, welche später für die Ausgestaltung der Lichtaustrittsfläche verantwortlich ist, mit einer entsprechenden Oberflächenrauigkeit versehen, die dann auf die Lichtaustrittsfläche der Linse übertragen wird.

Durch derartige Maßnahmen kann zwar das Erscheinungsbild im Vergleich zu einer perfekt planen Lichtaustrittsfläche des Linsenkörpers verbessert werden, allerdings führen diese Streustrukturen aufgrund der hiermit zwangsläufig verbunden Unregelmäßigkeiten und Unstetigkeiten in der Oberfläche zu Störungen, die dazu führen, dass Licht zumindest teilweise undefiniert in ungewünschte Richtungen abgegeben wird. Dies führt letztendlich zu teilweisen Verlusten in der Lichtabgabe bis hin zu einem störenden Blenden durch die gesamte LED-Leuchte.

Als alternative Maßnahme wäre auch das Anbringen von Streufolien an der Lichtaustrittsfläche der Linse denkbar, wobei diese Streufolien die Möglichkeit bieten, eine gezielte Aufweitung der Lichtverteilung zu bewirken. Aufgrund der mindernden Wirkung auf die insgesamt durchsetzbare Lichtmenge führt dies jedoch zu einer nicht akzeptablen Reduzierung des Wirkungsgrades der Optik.

Aus dem Stand der Technik ist in diesem Zusammenhang bekannt, die Oberfläche eines optischen Elements thermisch zu bearbeiten, um diese mit den oben beschriebenen Streustrukturen zu versehen. Beispielsweise beschreibt die JP 2009 241369 A ein Verfahren, bei dem ein optisches Element mit einem Laser bearbeitet wird, um Oberflächenbereiche des Elements anzuschmelzen und hierdurch mit einer Struktur zu versehen. Diese Struktur weist dann im Vergleich zu der auf mechanischem Wege erstellten Streustruktur weniger Unstetigkeiten auf, so dass eine bessere Kontrolle der Lichtabgabe ermöglicht wird.

Aus der Veröffentlichung "Fabrication of a fused silica based mold for the microlenticular lens array using a femtosecond laser and a CO_2 laser", Optical Materials Express, Bd. 4, Nr. 11, 1. November 2014 (2014-11-01), Seite 2233, ISSN: 2159-3930 ist ein Verfahren zur Herstellung eines optischen Elements mit einem Oberflächenbereich, welcher dreidimensionale mikrolentikuläre Linsenanordnungen aufweist, welche durch Umformung mittels zweier Laser erstellt wurden, beschrieben. Weiterhin ist beschrieben, dass das optische Element durch ein Gussverfahren hergestellt werden kann, wobei die Gussform einen entsprechenden Oberflächenbereich mit dreidimensionalen mikrolentikulären Linsenanordnungen aufweist.

Weiterer Stand der Technik wird in US 2007/092636 A1, KR 2008 0081561 A, US 2003/202241 A1, US 2007/085942 A1, US 8 591 074 B1, US 2013/033863 A1, KR 2014 0062921 A, CN 203 810 278 U offenbart.

Die im Stand der Technik beschriebene Vorgehensweise führt also zu einer Verbesserung der Eigenschaften eines optischen Elements, allerdings ist sie nicht für eine Herstellung entsprechende Elemente in großer Stückzahl geeignet.

Der vorliegenden Erfindung liegt deshalb die Aufgabenstellung zugrunde, eine Möglichkeit zur Verfügung zu stellen, optische Elemente zur Beeinflussung der Lichtabgabe von Leuchtmitteln in hoher Qualität und einfacher Weise herstellen zu können.

Die Aufgabe wird durch ein Verfahren zum Herstellen eines Spritzgießwerkzeugs zum Erstellen eines optischen Elements zur Beeinflussung der Lichtabgabe von Leuchtmitteln, welches die Merkmale des Anspruchs 1 aufweist, gelöst. Vorteilhafte Weiterbildungen der Erfindung sind Gegenstand der abhängigen Ansprüche.

Die erfindungsgemäße Lösung beruht wiederum auf dem Gedanken, die Lichtaustrittsfläche des optischen Elements bzw. allgemein eine lichtbrechende Fläche des optischen Elements mit einer Streustruktur zu versehen, diese allerdings nicht durch mechanisches Bearbeiten des optischen Elements bzw. des zur Herstellung des optischen Elements genutzten Werkzeugs mit entsprechender Formgebung, z.B. eines Spritzgießwerkzeugs zu erstellen, sondern stattdessen das Werkzeug thermisch mit Hilfe eines Lasers zu bearbeiten. Es hat sich herausgestellt, dass mit Hilfe eines thermischen Bearbeitens des Spritzgießwerkzeugs Strukturen erzielt werden können, welche stetig, also ohne undefinierte Sprünge, Kanten oder dergleichen ausgestaltet sind. Mit Hilfe einer derartigen stetigen Struktur kann dann die Lichtabgabe durch das optische Element deutlich besser und effizienter beeinflusst werden, wobei einerseits die angestrebte Vergleichmäßigung, durch welche Inhomogenitäten in dem zu beleuchtenden Bereich vermieden werden, erzielt wird, andererseits auch undefinierte Streuungen des Lichts an der Streustruktur vermieden werden.

Gemäß der vorliegenden Erfindung wird also ein Verfahren zum Herstellen eines Spritzgießwerkzeugs zum Erstellen eines optischen Elements zur Beeinflussung der Lichtabgabe von Leuchtmitteln vorgeschlagen, wobei das Spritzgießwerkzeug derart gestaltet ist, dass das herzustellende optische Element einen kegelstumpfartigen Linsenkörper aufweist, wobei der kegelstumpfartige Linsenkörper eine Ausnehmung mit einer Bodenfläche und Umfangsfläche als Lichteinkoppelfläche, eine Mantelfläche, sowie eine lichtbrechende Lichtaustrittsfläche, die mit einer wellenartig ausgebildeten Streustruktur versehen ist, aufweist, wobei das Spritzgießwerkzeug einen Oberflächenbereich aufweist, der zum Bilden der lichtbrechenden Lichtaustrittsfläche des optischen Elements vorgesehen ist, und wobei die Struktur des Oberflächenbereichs durch zwei überlagerte stetige und differenzierbare, wellenartige Strukturen gebildet ist, welche im Wesentlichen senkrecht zueinander ausgebildet sind. Dabei ist erfindungsgemäß vorgesehen, dass der Oberflächenbereich des Spritzgießwerkzeugs mit einer Struktur versehen ist, welche durch Umschmelzen mit Hilfe eines Lasers erstellt wurde.

Ferner wird ein Verfahren zum Erstellen eines optischen Elements zur Beeinflussung der Lichtabgabe von Leuchtmitteln vorgeschlagen, wobei das optische Element aus einem lichtdurchlässigen Material besteht und zumindest einen Oberflächenbereich aufweist, der als lichtbrechende Lichtaustrittsfläche des optischen Elements dient, und wobei das optische Element durch Spritzgießen mit Hilfe eines Spritgießwerkzeugs erstellt wird, welches nach dem erfindungsgemäßen Verfahren hergestellt wurde.

Erfindungsgemäß weist die Struktur des Oberflächenbereichs wie bereits erwähnt zwei überlagerte stetige und differenzierbare, wellenartige Strukturen auf, welche im Wesentlichen senkrecht zueinander ausgerichtet sind. Das thermische Bearbeiten des Spritzgießwerkzeugs erlaubt dabei, Strukturen zu erstellen, deren Wellenlänge im Bereich von wenigen bis einigen Mikrometern, typisch etwa 50-500µm liegt. Auch kleinere oder größere Wellenlängen wären realisierbar, wobei in diesem Fall allerdings dann die gewünschte streuende Funktion der Struktur wiederum zu- bzw. abnimmt. Die Erhebungen der wellenartigen Strukturen können dabei im Bereich von wenigen Mikrometern, typisch etwa 5-100µm liegen. Strukturen in derartigen Größenordnungen wären durch mechanische Bearbeitung von Oberflächen in einer entsprechenden Genauigkeit nicht möglich. Stattdessen würden hierbei immer Unregelmäßigkeiten bzw. Sprünge entstehen, die jedoch mit der erfindungsgemäßen Lösung vermieden werden.

Zur Klarstellung ist hier darauf hinzuweisen, dass die mit Hilfe der erfindungsgemäßen Lösung realisierte Struktur zwar als Streustruktur bezeichnet wird, da sie nach wie vor die oben erwähnte Aufgabe der beim Stand der Technik genutzten Streustruktur erfüllen soll, nämlich eine Vergleichmäßigung der Lichtabgabe zu erzielen, allerdings im erfindungsgemäßen Fall keine klassische diffuse Streuung, als kein statistisches Ablenken der Lichtstrahlen erfolgt. Stattdessen zeichnet sich die erfindungsgemäße Lösung dadurch aus, dass aufgrund der damit erzielbaren stetigen und differenzierbaren Oberflächengestaltung eine sehr gut kontrollierbare Beeinflussung der Lichtstrahlen durch Brechung erfolgen kann.

Das in der erfindungsgemäßen Weise hergestellte optische Element besteht vorzugsweise aus einem glasklaren Kunststoff-Material (alternativ hierzu wären auch Glas oder Silikon denkbar), wobei ferner vorzugsweise die Struktur auf der gesamten Lichtaustrittsfläche des optischen Elements ausgebildet ist. Es handelt sich bei dem erfindungsgemäßen optischen Element insbesondere um eine Linse, die in ihrer grundsätzlichen Struktur derjenigen entspricht, wie sie in den Figuren 5 und 6 dargestellt ist, also aus dem Stand der Technik bekannt ist. Allein durch die erfindungsgemäße Herstellung der Lichtaustrittsfläche kann im Vergleich zu den aus dem Stand der Technik bekanten Lösungen eine deutliche Verbesserung der Lichtabgabe bei einfacher Herstellung erzielt werden.

Nachfolgend soll die Erfindung anhand der beiliegenden Zeichnung näher erläutert werden. Es zeigen:
Figur 1 ein Ausführungsbeispiel eines optischen Elements in Form einer Linse in Schnittdarstellung;
Figur 2 ein Beispiel für eine denkbare Gestaltung der Lichtaustrittsfläche des optischen Elements;
Figuren 3 und 4 Darstellungen zur Wirkung der Strukturierung und
Figuren 5 und 6 ein aus dem Stand der Technik bekanntes optisches Element.

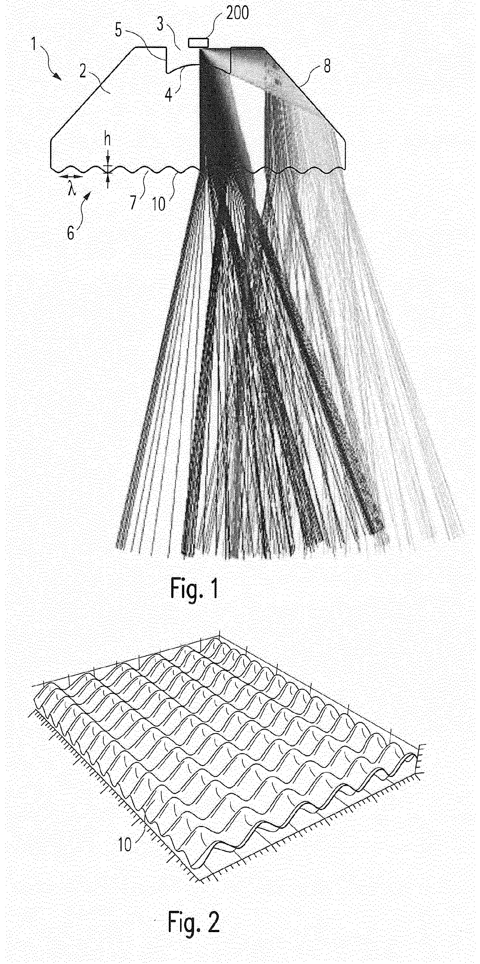

Figur 1 zeigt die Schnittdarstellung einer Linse 1 zur Beeinflussung des Lichts einer LED 200. Das dargestellte Ausführungsbeispiel wurde ausgewählt, da im Vergleich zu der aus dem Stand der Technik bekannten Lösung, wie sie in Figur 6 gezeigt ist, besonders gut die Unterschiede erläutert werden können. Grundsätzlich ist allerdings das Prinzip der Strukturierung einer lichtbrechenden Oberfläche eines optischen Elements mittels thermischer Bearbeitung auf alle Arten von optischen Elementen anwendbar.

Der Aufbau der in Figur 1 dargestellten Linse entspricht also dem Aufbau der in Figur 6 gezeigten Linse und diese kann bspw. insgesamt zum Realisieren einer Optik genutzt werden, wie sie in Figur 5 gezeigt ist. Auch die erfindungsgemäße Linse 1 weist also einen etwa kegelstumpfartig ausgestalteten Linsenkörper 2 - vorzugsweise bestehend aus glasklarem Material, insbesondere Kunststoff oder aber auch Glas oder Silikon - auf, der an seiner der LED 200 zugewandten Seite eine Ausnehmung 3 aufweist, deren Bodenfläche 4 und Umfangsfläche 5 die Lichteintrittsflächen für das LED-Licht bilden. Wiederum wird derjenige Anteil des Lichts, der über die vorzugsweise leicht linsenartig, also gekrümmt ausgeführte Bodenfläche 4 der Ausnehmung 3 in den Linsenkörper 2 eintritt, derart gebrochen, dass er auf die Unterseite 6 des Linsenkörpers trifft und über die durch die Unterseite gebildete Lichtaustrittsfläche 7 der Linse 1 austritt. Ein anderer Teil des Lichts hingegen, der über die Umfangsfläche 5 der Ausnehmung 3 in den Linsenkörper 2 eintritt, wird an der Mantelfläche 8 des Linsenkörpers 2 total reflektiert und verlässt dann wiederum die Linse 1 über die Austrittsfläche 7.

Im Gegensatz zu der aus dem Stand der Technik bekannten Lösung ist nunmehr allerdings die Lichtaustrittsfläche 7 mit einer wellenartig ausgebildeten Streustruktur 10 versehen, welche in der nachfolgend beschriebenen speziellen Art und Weise erstellt wurde. Streustrukturen waren, wie bereits erwähnt, auch bereits im Stand der Technik bekannt, wurden allerdings dadurch realisiert, dass die entsprechende Oberfläche des zur Herstellung der Linse üblicherweise genutzten Spritzgießwerkzeugs in der Regel mechanisch bearbeitet wurde. Ein mechanisches Bearbeiten hat zwangsläufig zur Folge, dass einzelne Partikel in unregelmäßiger Weise aus der Oberfläche des Spritzgießwerkzeugs entfernt werden, so dass eine unregelmäßige und insbesondere unstetige Struktur mit Sprüngen und Kanten entsteht, durch welche, wie eingangs erwähnt, ungewollte und die Effizienz der Linse reduzierende Streuungen entstehen können.

Im vorliegenden Fall ist hingegen vorgesehen, dass die Streustruktur 10 in einer speziellen Art und Weise definiert erstellt wird, die sicherstellt, dass die Streustruktur 10 stetig und differenzierbar ausgebildet ist. D.h., die Struktur 10 weist weder Sprünge noch Knicke oder Kanten auf, durch welche ungewollte Lichtstreuungen entstehen könnten. Stattdessen kann - wie nachfolgend näher erläutert - durch die Struktur 10 das von der Linse 1 insgesamt abgegebene Licht definiert und äußerst effizient in gewünschter Weise beeinflusst werden, um eine gewünschte Lichtabgabe zu erzielen.

Die Streustruktur 10 der Linse 1 wird also nicht durch ein mechanisches Bearbeiten der Linse oder des zur Herstellung genutzten Spritzgießwerkzeugs erzielt, sondern dadurch erhalten, dass das zum Herstellen der Linse genutzte Spritzgießwerkzeug thermisch bearbeitet wird. Da eine thermische Bearbeitung des Spritzgießwerkzeugs - oder auch eines anderen zur Herstellung des optischen Elements genutzten Werkzeugs mit entsprechender Formgebung - zur Folge hat, dass die damit hergestellten Linsen nicht mehr einzeln nachträglich bearbeitet werden müssen, um die Streustruktur 10 zu erzielen, ist selbstverständlich ein Einbringen der komplementären Streustruktur in die Oberfläche des Werkzeugs zu bevorzugen. Im Rahmen einer nicht beanspruchten Alternative könnte das beschriebene Prinzip allerdings auch unmittelbar auf das optische Element angewendet werden.

Im Rahmen der thermischen Behandlung findet also kein abhebendes mechanisches Bearbeiten oder anderweitiges Strukturieren bspw. durch fotochemisches Ätzen statt, sondern es wird lediglich ein Umformen der Oberfläche vorgenommen. Dieses Strukturieren erfolgt dabei mit Hilfe von Laserstrahlung, wobei hierbei kein Material der Werkzeugoberfläche abgetragen wird, sondern stattdessen im schmelzflüssigen Zustand durch eine Modulation des Schmelzbadvolumens das Material umverteilt wird. Dabei ist es möglich, durch entsprechendes Modulieren der Laserleistung das Schmelzbadvolumen gezielt zu beeinflussen und damit auch die Oberflächenstruktur in gewünschter Weise zu formen. Der Vorteil dieser Vorgehensweise besteht dabei darin, dass das Material des Spritzgießwerkzeugs - oder ggf. auch des optischen Elements - nach der thermischen Bearbeitung direkt aus der Schmelze heraus erstarrt, so dass abgesehen von der gezielt eingebrachten Strukturierung eine gleichmäßige, im Prinzip vernachlässigbare Rauheit erzielt wird. Die Oberfläche des Werkzeugs wird also einerseits in gewünschter Weise strukturiert, andererseits im Prinzip gleichzeitig poliert, so dass tatsächlich im Rahmen der gewünschten Größenordnung eine nahezu ideal stetige und differenzierbare Oberflächenstruktur geschaffen wird.

In einer einfachen Form kann also mit Hilfe der beschriebenen Vorgehensweise die Lichtaustrittsfläche 7 der Linse 1 mit einer Wellenform versehen werden, wie sie in der Schnittdarstellung von Figur 1 erkennbar ist. Die Wellenstruktur 10, die im dargestellten Ausführungsbeispiel in etwa einer Sinusform folgt, grundsätzlich jedoch jegliche Form annehmen kann, die durch eine mathematische Gleichung beschreibbar ist, ist dabei derart ausgebildet, dass sich zwei Wellenstrukturen, die im Wesentlichen senkrecht zueinander ausgerichtet sind, überlagern, so dass sich letztendlich eine eher matrixartig ausgebildete Struktur von Erhebungen und Senken ergibt, wie dies in Figur 2 gezeigt ist. Die Strukturierung der Lichtaustrittsfläche bzw. allgemein der lichtbrechenden Fläche der Optik kann dabei die gesamte Fläche überlagern, denkbar wäre jedoch auch, gezielt nur einen Teilbereich bspw. der Lichtaustrittsfläche in gewünschter Weise zu strukturieren.

Eine denkbare Größenordnung der mit Hilfe der erfindungsgemäßen Vorgehensweise erzielbaren Struktur liegt dabei bspw. bei einer Wellenlänge λ, also einem Abstand zwischen zwei aufeinander folgenden Erhebungen, im Bereich von wenigen bis einigen Mikrometern, etwa 50-500µm. Die Höhe h der Erhebungen kann dabei im Bereich von wenigen Mikrometern, etwa 5-100µm liegen, wobei grundsätzlich auch kleinere oder größere Werte denkbar wären, diese jedoch dann zum Erzielen des nachfolgend beschriebenen Einflusses auf die Lichtabgabe weniger effizient sind.

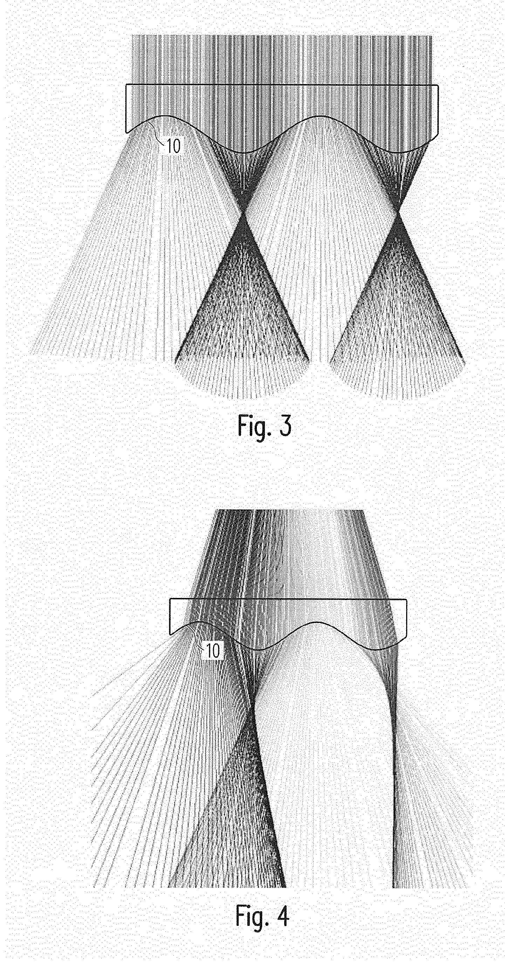

Die Wirkungsweise der Strukturierung kann nämlich den Figuren 3 und 4 sowie auch der Darstellung von Figur 1 entnommen werden. Erkennbar ist zunächst anhand der Figuren 3 und 4, dass aufgrund des Fehlens einer Rauheit der Oberfläche kein unkontrolliertes Streuen der das optische Element verlassenden Lichtstrahlen mehr stattfindet, sondern die Strukturierung letztendlich dazu führt, dass eine Vielzahl von sehr kleinen aber sehr präzise ausgebildeten linsenartigen Abschnitten erzielt wird, durch welche eine deutlich bessere Kontrolle der Beeinflussung des Lichts durch Brechung ermöglicht wird. Im Vergleich zu klassischen Optiken wird der Verlust an unkontrolliertem Licht also deutlich reduziert und die Effizienz hinsichtlich der Lichtabgabe nochmals deutlich gesteigert.

Ein anderer wesentlicher Vorteil besteht insbesondere bei der in den Ausführungsbeispielen gezeigten Strukturierung, bei der diese in etwa einer Sinusform folgt, darin, dass einzelne Teilstrahlenbündel jeweils in im Prinzip identischer Weise beeinflusst werden. Ein Vergleich des Strahlenverlaufs zwischen Figur 1 und Figur 6 zeigt deutlich, dass Licht, welches die Linse 1 an unterschiedlichen Orten der Lichtaustrittsfläche 7 verlässt, im Vergleich zu Figur 6 trotz allem auf den im Wesentlichen gleichen Winkelbereich gerichtet wird. Hierdurch findet im Vergleich zum Stand der Technik eine deutlich bessere Überlagerung der verschiedenen Teilstrahlenbündel statt, so dass letztendlich in dem von der Linse 1 beleuchteten Bereich keine Inhomogenitäten hinsichtlich der Helligkeit sowie evtl. der Farbe auftreten. Dies wäre lediglich dann der Fall, wenn gezielt die Struktur 10 an verschiedenen Bereichen der Lichtaustrittsfläche 7 der Linse 1 unterschiedlich ausgebildet wird.

Letztendlich kann also mit Hilfe der erfindungsgemäßen Vorgehensweise die Effizienz zur Herstellung eines qualitativ hochwertigen optischen Elements deutlich verbessert werden.

## Patentansprüche

1. Verfahren zum Herstellen eines Spritzgießwerkzeugs zum Erstellen eines optischen Elements zur Beeinflussung der Lichtabgabe von Leuchtmitteln,
wobei das Spritzgießwerkzeug derart gestaltet ist, dass das herzustellende optische Element (1) einen kegelstumpfartigen Linsenkörper (2) aufweist, wobei der kegelstumpfartige Linsenkörper (2) eine Ausnehmung (3) mit einer Bodenfläche (4) und Umfangsfläche (5) als Lichteinkoppelfläche, eine Mantelfläche (8), sowie eine lichtbrechende Lichtaustrittsfläche (7), die mit einer wellenartig ausgebildeten Streustruktur (10) versehen ist, aufweist,
wobei das Spritzgießwerkzeug einen Oberflächenbereich aufweist, der zum Bilden der lichtbrechenden Lichtaustrittsfläche des optischen Elements (1) vorgesehen ist und mit einer Struktur versehen wird, welche durch Umschmelzen mit Hilfe eines Lasers erstellt wird,
und wobei die durch Umschmelzen erstellte Struktur des Oberflächenbereichs durch zwei überlagerte stetige und differenzierbare, wellenartige Strukturen gebildet ist, welche im Wesentlichen senkrecht zueinander ausgebildet sind.

2. Verfahren zum Erstellen eines optischen Elements zur Beeinflussung der Lichtabgabe von Leuchtmitteln,
wobei das optische Element (1) aus einem lichtdurchlässigen Material besteht und zumindest einen Oberflächenbereich (7) aufweist, der als lichtbrechende Lichtaustrittsfläche des optischen Elements (1) dient,
und wobei das optische Element durch Spritzgießen mit Hilfe eines Spritgießwerkzeugs erstellt wird, welches nach dem Verfahren gemäß Anspruch 1 hergestellt wurde.

3. Verfahren zum Erstellen eines optischen Elements nach Anspruch 2, wobei die wellenartige Struktur eine Wellenlänge (λ) im Bereich von etwa 50-500µm aufweist.

4. Verfahren zum Erstellen eines optischen Elements nach Anspruch 3, wobei die wellenartige Struktur Erhebungen mit einer Höhe (h) im Bereich von etwa 5-100µm aufweist.

5. Verfahren zum Erstellen eines optischen Elements nach einem der Ansprüche 2 bis 4, bei dem das optische Element aus einem glasklaren Material, vorzugsweise aus Kunststoff, Glas oder Silikon gebildet ist.

6. Verfahren zum Erstellen eines optischen Elements nach einem der Ansprüche 2 bis 5, wobei die Streustruktur (10) auf der gesamten Lichtaustrittsfläche des optischen Elements (1) ausgebildet ist.

7. Verfahren zum Erstellen eines optischen Elements nach einem der Ansprüche 2 bis 6, in welchem es sich bei dem optischen Element um eine Linse handelt.

## Claims

1. Method for producing an injection molding tool for creating an optical element for influencing the light output of lighting means,
wherein the injection molding tool is designed such that the optical element (1) to be produced comprises a frustoconical lens body (2), wherein the frustoconical lens body (2) comprises a recess (3) having a base surface (4) and peripheral surface (5) as a light in-coupling surface, a lateral surface (8), and a light-refracting light exit surface (7) provided with a scattering structure (10) which is configured in a wave-like manner, wherein the injection molding tool comprises a surface region which is provided for forming the light-refracting light exit surface of the optical element (1) and is provided with a structure created by remelting with the aid of a laser,
and wherein the structure of the surface region created by remelting is formed by two superposed continuous and differentiable wave-like structures which are substantially perpendicular to one another.

2. Method for creating an optical element for influencing the light output of lighting means,
wherein the optical element (1) consists of a light-transmissive material and comprises at least one surface region (7) which serves as a light-refracting light exit surface of the optical element (1),
and wherein the optical element is created by injection molding with the aid of an injection molding tool which was produced according to the method according to Claim 1.

3. Method for creating an optical element according to Claim 2,
wherein the wave-like structure has a wavelength (λ) in the range of about 50-500 µm.

4. Method for creating an optical element according to Claim 3,
wherein the wave-like structure comprises elevations having a height (h) in the range of about 5-100 µm.

5. Method for creating an optical element according to any one of Claims 2 to 4, in which the optical element is made of a crystal-clear material, preferably plastic, glass or silicone.

6. Method for creating an optical element according to any one of Claims 2 to 5, wherein the scattering structure (10) is configured on the entire light exit surface of the optical element (1).

7. Method for creating an optical element according to any one of Claims 2 to 6, in which the optical element is a lens.

## Revendications

1. Procédé de production d'un outil de moulage par injection destiné à la réalisation d'un élément optique permettant d'influer sur l'émission de lumière de lampes,
dans lequel l'outil de moulage par injection est conçu de telle manière que l'élément optique (1) à produire présente un corps de lentille (2) tronconique, ledit corps de lentille (2) tronconique présentant un évidement (3) doté d'une surface de fond (4) et d'une surface périphérique (5) servant de surface d'injection de lumière, une surface d'enveloppe (8), ainsi qu'une surface de sortie de lumière (7) réfringente pourvue d'une structure de diffusion (10) de forme ondulée,
dans lequel l'outil de moulage par injection présente une zone de surface qui est prévue pour former la surface de sortie de lumière réfringente de l'élément optique (1) et est dotée d'une structure réalisée par refusion à l'aide d'un laser,
et dans lequel la structure de la zone de surface réalisée par refusion est formée par la superposition de deux structures ondulées régulières et différenciables, formées perpendiculairement l'une par rapport à l'autre.

2. Procédé de réalisation d'un élément optique permettant d'influer sur l'émission de lumière provenant de lampes,
dans lequel l'élément optique (1) se compose d'un matériau translucide et présente au moins une zone de surface (7) servant de surface de sortie de lumière réfringente de l'élément optique (1),
et dans lequel l'élément optique est réalisé par moulage par injection à l'aide d'un outil de moulage par injection produit conformément à la revendication 1.

3. Procédé de réalisation d'un élément optique selon la revendication 2,
dans lequel la structure ondulée présente une longueur d'onde (λ) située dans une plage d'environ 50 à 500 µm.

4. Procédé de réalisation d'un élément optique selon la revendication 3,
dans lequel la structure ondulée présente des renflements d'une hauteur (h) située dans une plage d'environ 5 à 100 µm.

5. Procédé de réalisation d'un élément optique selon l'une des revendications 2 à 4, dans lequel l'élément optique se compose d'un matériau transparent, de préférence de plastique, verre ou silicone.

6. Procédé de réalisation d'un élément optique selon l'une des revendications 2 à 5,
dans lequel la structure de diffusion (10) est conçue sur la totalité de la surface de sortie de lumière de l'élément optique (1).

7. Procédé de réalisation d'un élément optique selon l'une des revendications 2 à 6,
dans lequel l'élément optique est une lentille.
